# EUROPEAN PATENT SPECIFICATION

(11) **EP 1 964 477 B1**
(45) Date of publication and mention of the grant of the patent: **16.06.2010**
(21) Application number: 07004255.1
(22) Date of filing: 01.03.2007
(51) Int. Cl.: A23G 3/26

(54) **Confectionary composition comprising a xanathine derivative and low fructose**
Konfektzusammensetzung mit einem Xanthinderivat und geringem Fruktosegehalt
Composition de confiserie comprenant un dérivé de xanathine et peu de fructose

(43) Date of publication of application: 03.09.2008
(73) Proprietor: The Procter and Gamble Company, Cincinnati, Ohio 45202 (US)
(72) Inventor: Isse, Abdikadir (NMN), Hayes,Middlesex UB4 9DZ (GB); Lorenzi, Marc Paul, Egham, Surrey, TW20 8HG (GB); Myatt, Graham John, Bracknell,Berkshire RG42 3TJ (GB)
(74) Representative: Clemo, Nicholas Graham

(56) References cited:
- EP-A- 1 693 057
- EP-A2- 1 269 856
- WO-A-00/06127
- WO-A-95/00038
- WO-A-2006/091447
- US-A- 5 626 896
- US-A1- 2004 126 472

## Description

### FIELD OF THE INVENTION

The present invention relates to a stable candy base comprising a sugar base, a xanthine derivative and an edible organic acid. This candy base is characterized by having a low fructose level, which improves stability, reduces moisture absorption and maintains the flavour profile.

### BACKGROUND OF THE INVENTION

To appeal to consumers' tastes, confectionery compositions comprising a candy base need to be stable over time. The visual appearance as well as the mouth-feel and taste of the candy base need to vary as little as possible from the time the confectionery is manufactured and packaged to the moment it is consumed. Variations in visual appearance, mouth-feel and taste among confectionaries within the same package also need to be minimized.

Flavours and other ingredients are generally added during the manufacture of the candy base to provide specific benefits. It is generally known in the art that edible organic acids may function as flavour enhancers; when provided at optimal levels edible organic acids may significantly improve the release of flavours from the confectionery composition. Furthermore, they may stimulate salivation. However, the addition of edible organic acids to confectionery compositions may alter the stability of the candy base and/or the perception of flavours over time. This is detrimental to the visual appearance and the taste of the candy base. According to US 2004/0126472, acidic components may provoke the hydrolysis of the sugar alcohols resulting in a sticky and hygroscopic candy. US 2004/0126472 discloses a method of manufacture of a stable candy comprising at least one acidic component and at least one sugar alcohol. Sugar alcohols provide sweetness as they mimic sugars but are not metabolized as sugars, provide fewer calories and thus less energy.

One major problem in the manufacture of a sugar base comprising an edible organic acid relies in the changes that the sugar base candy may have undergone alter manufacture so that the candy does not closely resemble the product originally designed and produced. These changes may include moisture absorption, which may render the sugar base candy soft and sticky.

Softness and stickiness may cause several drawbacks, for example an appealing shape of a confectionery may be disrupted during storage due to the increased softness of the candy base and the weight of the overlying candies within the same package. Loss of shape is not the sole disadvantage. Increased moisture content may also induce stickiness in the candy base, causing it to stick to its own wrapper, to the other candies within the same package and/or to the package itself. Although this problem may be resolved by using low water vapor diffusion packages to prevent the moisture entering, the high costs associated therewith make these packages commercially unappealing.

Softness and stickiness may also be more noticeable when the candy base constitutes the shell or the outer case of a centre-filled candy which may comprise a solid or liquid core. Loss of shape in liquid core centre-filled candies may lead to the release of the liquid core out from the candy base shell into the package. WO2006/091447 circumvents this problem by providing a centre-filled confectionery comprising a shear thinning centre-filled composition having rheological attributes that improve the stability of the confectionery. Nevertheless, being restrained to certain rheological attributes of the liquid centre-fill represents a limitation for manufacturers. Furthermore, liquid centre-filled candies have high consumer appeal and may represent a useful platform to deliver special ingredients.

Ingredients such as xanthine and its methylated derivatives have recently received renewed interest because of the neurostimulating effects associated with their use. However, xanthine derivatives, in particular caffeine, seem to enhance moisture absorption and to alter, distort or mask the taste of other flavours within the sugar based candy.
Thus, a need exists for a stable sugar base candy comprising xanthine derivatives and edible organic acids.

Patent application WO 95/00038 discloses hard candies manufactured from a sugar base comprising sugar and corn syrup and further comprising citric acid and instant tea or instant coffee. There is no disclosure of the fructose content of the final candy. Likewise, EP 1 693 057 describes centre-filled hard candies containing caffeine; their hard candy shell is made from a cooked sugar base comprising sucrose, glucose syrup, citric acid and caffeine. The final fructose content of the candy shell is not disclosed. EP 1 269 856 discloses soft candies which do not contain xanthine derivatives and may use high fructose corn syrup as part of their sugar base. US 5,626,896 discloses that fructose and blends of fructose with other sugars or sugar syrups are hygroscopic.

### SUMMARY OF THE INVENTION

The present invention provides a confectionery composition comprising a candy base, said candy base comprising:
i. one or more sugar bases;
ii. at least one edible organic acid;
iii. greater than 0% and less than 1.90% of fructose by weight of said candy base; and
iv. one or more xanthine derivatives.
The present invention further relates to a method of continuous manufacture of said candy base.

### DETAILED DESCRIPTION OF THE INVENTION

Unless otherwise stated herein, all percentages are weight percentages.

The present invention provides a confectionery composition comprising a candy base, said candy base comprising one or more sugar bases, at least one edible organic acid, one or more xanthine derivatives and greater than 0.1 and less than 1.9% of fructose by weight of said candy base. This confectionery composition is characterized by having improved stability, less moisture absorption, being capable of maintaining the original shape during storage and not being sticky,

### 1. CANDY BASE

The confectionery composition according to the present invention comprises a candy base. The candy base comprises one or more sugar bases. Sugar bases useful in the present invention include mono-, di- and trisaccharides, oligosaccharides or derivatives thereof. Non-limiting examples include glucose, lactose, maltose, xylose, sucrose and fructooligosar-charides. Preferred sugar bases according to the present invention comprise glucose syrup, sucrose or mixture thereof, preferably a mixture thereof. The candy base according to the present invention comprises from 10% to 99% of sugar bases, preferably from 15% to 95%, more preferably from 15% to 90% by weight of the candy base. Preferred embodiments according to the invention comprise from 30% to 85% glucose syrup by weight of the sugar base and from 15% to 70% sucrose by weight of the sugar base.

The confectionery composition according to the invention comprises at least one edible organic acid or salts thereof. Examples of suitable edible organic acids within the scope of the present invention are saturated and unsaturated hydroxy and non-hydroxy C₁ to C₆ mono-, di-, and tribasic carboxylic acids such as citric acid, fumaric acid, malic acid, lactic acid, tartaric acid, adipic acid, succinic acid, ascorbic acid, glutaric acid, acetic and hydroxyacetic acid, glucono delta lactone, phosphoric acid or mixtures thereof, preferably citric acid, malic acid, lactic acid, tartaric acid, adipic acid, ascorbic acid or mixture thereof. Examples of salts which may be used as a source of acid are alkali and alkaline earth metal salts of the edible organic acids listed above, such as monobasic calcium phosphate, monobasic sodium phosphate, sodium hydrogen sulfite and sodium pyrophosphate.

The present inventors have surprisingly found that fructose levels in a candy base below 1.90% by weight of the candy base render the candy base stable during its shelf life. Preferably, the candy base according to the present invention comprises less than 1.5% by weight of fructose, more preferably less than 1.0%, even more preferably less than 0.75% of fructose by weight of the candy base. The fructose level is greater than 0% by weight of said candy base. Without wishing to be bound by theory, fructose as used herein and in the presence of at least one edible organic acid and one or more xanthine derivatives, may improve the stability of a confectionery by reducing the hygroscopicity of the overall composition.

The candy of the present invention comprises one or more xanthine derivatives. Xanthine and its methylated derivatives are useful ingredients due to their stimulating effect. Xanthine derivatives useful in the present invention include those that conform to formula (I): 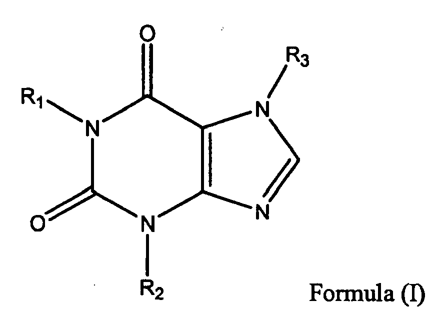
where R₁, R₂ and R₃ are independently selected from H or methyl and mixtures thereof Preferred xanthine derivatives include:
Xanthine, where R₁, R₂ and R₃ in formula (I) are all H;
Caffeine, where R₁, R₂ and R₃ are all methyl;
Theobromine, where R₁ is H and R₂ and R₃ are both methyl;
Theophylline, where R₁ and R₂ are both methyl and R₃ is H.
More preferably the xanthine derivative comprises caffeine.

The candy base according to the present invention may preferably comprise from 0.01 % to 5% xanthine derivative by weight of said candy base. Preferably, said candy base comprises from 0.05% to 2.5% xanthine derivative, more preferably from 0.1% to 1% xanthine derivative. Preferably the confectionery composition comprises sufficient xanthine derivative to deliver from 1 mg to 150 mg of xanthine derivative per individual confectionery unit, more preferably from 5 mg to 100mg, even more preferably from 10 mg to 50 mg xanthine derivative per individual confectionery unit. More preferably said candy base comprises from 22.5 to 27.5 mg of caffeine per individual confectionery unit.

Without wishing to be bound by theory, xanthine derivatives, in particular caffeine, in the presence of an edible organic acid may possibly form xanthine derivative organic salts. Caffeine in the presence of citric acid, for example, may form caffeine citrate. These xanthine derivative organic salts are believed to have a speed of dissociation in water faster than that of the xanthine derivatives themselves. Xanthine derivative organic salts within the candy base may reduce stability of said candy base during manufacture and storage. The candy base may turn soft, crack and it may become opaque, sticky and assume a glue-like consistency over time. These changes may not only affect the visual appearance of the candy base but they may likewise alter the organoleptic properties of the candy base. Without wishing to be bound by theory, fructose within the candy base may induce water vapor absorption during storage of said candy base. The confectionery may be stored for months and therefore, as the moisture content of said candy base increases, the interaction of xanthine salts with other ingredients within the candy base may increase too. It has been surprisingly found that a candy base comprising sugar bases, edible organic acids, xanthine derivatives and levels of fructose below 1.9% by weight of said candy base, may improve the stability of the candy base by at least in part reducing moisture absorption and by at least maintaining the physical stability, taste and flavour profile.

### 2. PREFERRED CONFECTIONERY COMPOSITIONS

The confectionery composition according to the present invention may be any confectionery form as long as it comprises a candy base as described herein. Preferred forms are hard boiled sweets, solid and/or liquid centre-filled candies and lollies. The confectionery composition of the present invention preferably takes the form of a centre-filled candy comprising from 60% to 95%, preferably from 75% to 85% of a candy base and from 5% to 40%, preferably from 15% to 25% of a filling, by weight of the centre-fined candy.

The filling of the centre-filled candy may be solid, particularly a powder, or a liquid, including forms of intermediate consistency such as paste, gel or chewing gum material. Preferably the liquid is a non-aqueous filling comprising water at a level of less than 10%, preferably less than 8%, even more preferably less than about 6% by weight of the filling,

The filling may preferably comprise a polar edible liquid. As used herein "polar edible liquid" includes materials that are liquid at room temperature (25°C), that are polar in nature at the molecular level (i.e. have "positive" and ''negative'' poles dependent upon the electrostatic nature of the atoms that constitute the molecule) and that are edible (i.e. that have no known toxicological side-effects and are sanctioned for use in human foods and medicine). Suitable examples of polar edible liquids useful herein include water, low molecular weight alcohols, polyhydric alcohols and mixtures thereof, preferably polyhydric alcohols. Non-limiting examples of polyhydric alcohols suitable for use herein include glycerin, low molecular weight (i.e. less than 1000 MW) polyethylene glycols, propylene glycol and mixtures thereof, preferably glycerine. The filling of the present invention preferably comprises from 30% to 95% polar edible liquid or mixtures thereof by weight of the filling, more preferably from 40% to 90% and more preferably still from 50% to 85%, even more preferably still from 40% to 60% by weight of the filling.

The filling may further comprise a bulk sweetener, such as a sugar, to improve the palatability of the filling. Fillings may comprise from 5% to 80%, preferably from 30% to 75% on a dry solids basis by weight of the bulk sweetener. A preferred source of the sweetener is high fructose corn syrup which, being commercially available as an 80% solids of which the balance is essentially water, can also provide some, or even all, of the water required by aqueous fillings, when employed. Sugar free compositions comprising a sugar alcohol such as sorbitol or xylitol can also be used in combination with artificial or natural high intensity sweeteners; non-limiting examples of high intensity sweeteners are sodium saccharin, potassium acesulfame, aspartame and sucralose.

The filling may optionally further comprise one or more thickeners. Thickeners for use herein must be suitable for human consumption. Non-limiting examples of suitable thickeners include xanthan gum, carrageenan and derivatives, gellan gum, hydroxypropyl methyl cellulose, sclerotium gum and derivatives, pullulan, rhamsan gum, welan gum, konjac, curdlan, carbomer, algin, alginic acid, alginates and derivatives, hydroxyethyl cellulose and derivatives, hydroxypropyl cellulose and derivatives, starch phosphate derivatives, guar gum and derivatives, starch and derivatives, co-polymers of maleic acid anhydride with alkenes and derivatives, ethylene glycol/propylene glycol co-polymers, long chain alcohols such as behenyl alcohol, poloxamers and derivatives, polyacrylates and derivatives, methyl cellulose and derivatives, ethyl cellulose and derivatives, agar and derivatives, gum arabic and derivatives, pectin and derivatives, chitosan and derivatives, high molecular weight polyethylene glycols such as polyethylene Glycols (molecular weight 10,000 and above), karaya gum, locust bean gum, natto gum, co-polymers of vinyl pyrollidone with alkenes, tragacanth gum, polyacrylamides, chitin derivatives, gelatin, betaglucan, dextrin, dextran, cyclodextrin, methacrylates, microcrystalline cellulose, polyquaterniums, furcellaren gum, ghatti gum, psyllium gum, quince gum, tamarind gum, larch gum, tara gum, talc, kaolin clay, bentonite clay, cellulose, fumed silica and mixtures thereof. Preferred are xanthan gum, carrageenan and derivatives, gellan gum, hydroxypropyl methyl cellulose, sclerotium gum and derivatives, pullulan, rhamsan gum, welan gum, konjac, curdlan, carbomer, algin, alginic acid, alginates and derivatives, hydroxyethyl cellulose and derivatives, hydroxypropyl cellulose and derivatives, starch phosphate derivatives, guar gum and derivatives, starch and derivatives, co-polymers of maleic acid anhydride with alkenes and derivatives, cellulose gum and derivatives, poloxamers and derivatives, gelatin and mixtures thereof. More preferred are xanthan gum, carrageenan and derivatives, gellan gum, hydroxypropyl methyl cellulose, gelatin and mixtures thereof, more preferably still xanthan gum.

The filling of the present invention preferably comprises from 0.001% to 10% thickener by weight of the filling. More preferably, the filling comprises the thickener at levels of from 0.01% to 5%, even more preferably from 0.01% to 2.5%, and even more preferably still from 0.01 % to 1%.

When the confectionery composition of the present invention is a liquid centre-filled candy, said centre-filled candy preferably comprises a cooling agent, a warming agent or mixtures thereof. More preferably said cooling agent and warming agent are located in distinct and discrete regions within the centre-filled candy. Even more preferably said candy base comprises a cooling agent and said centre-fill comprises a warming agent. Cooling and warming agents act to reduce the perception of the xanthine derivatives, in particular the bitterness of caffeine by not only masking the bitterness, but further by reducing the consumers ability to actually detect the caffeine. By physically separating the peak effects of cooling agent and warming agent, however, the overall organoleptic effect of the product is substantially improved.

Cooling agents suitable within the scope of the present invention are described in W097106695. Preferred for use herein are physiological cooling agents selected from the group consisting of menthol, peppermint oil, N-substituted-p-menthane-3-carboxamides, acyclic tertiary and secondary carboxamides, 3-1-menthoxy propan-1,2-diol, monomenthyl glutarate and mixtures thereof. The carboxamides found most useful are those described in U.S. Pat. No. 4,136,163, Jan. 23, 1979 to Watson et al., and U.S. Pat. No. 4,230, 688, Oct. 28, 1980 to Rowsell et al. The carboxamides in U.S. Pat. No. 4,136,163 are N-substituted-p-menthane-3-carboxamides, such as N-ethyl-p-menthane-3-carboxamide, commercially available as WS-3 from Wilkinson Sword. The carboxamides of U.S. Pat. No. 4,230,688 are certain acyclic tertiary and secondary carboxamides, such as trimethyl isopropyl butanamide, commercially available as WS-23 from Wilkinson Sword. More preferred for use herein are monomenthyl glutarate, N-ethyl-p-menthane-3-carboxamide, trimethyl isopropyl butanamide and mixtures thereof, more preferably still monomenthyl glutarate, commercially available as Cooler-2 from IFF (Netherlands). Preferred amount of cooling agents are from about 0.001 to about 10%, preferably from about 0.01 to about 5%, more preferably from about 0.01 to about 2%, more preferably still from about 0.01 to about 0.5% by weight of the centre-filled candy.

The balance of the cooling composition may be made up of a suitable appropriate carrier, such as water, propylene glycol or a bulk sweetener, described in more detail below. The cooling composition can further comprise a warming agent as described herein provided that the predominant effect is one of cooling.

Warming agents suitable within the scope of the present invention comprise vanillyl alcohol n-butyl ether, vanillyl alcohol n-propyl ether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, iso-propyl alcohol, iso-amylalcohol, benzyl alcohol, chloroform, eugenol, cinnamon oil, cinnamic aldehyde, phosphate derivatives thereof, or mixtures thereof. The phosphate derivatives mentioned are those described in WO 97/02273. A commercial example of a suitable warming agent for use herein is Optaheat (Symrise, Germany). The balance of the warming composition may be made up of a suitable appropriate carrier, such as water, propylene glycol or a bulk sweetener, described in more detail below. The warming composition can further comprise a cooling agent as described herein provided that the predominant effect is one of warming.

Suitable levels of the warming agent are from about 0.001 to about 10%, preferably from about 0.005 to about 5%, more preferably from about 0.01 to about 1%, more preferably still from about 0.01 % to about 0.5% by weight of said centre-filled candy.

The confectionery composition according to the present invention may further comprise a flavouring agent. As used herein, the term 'flavouring agent' means those flavour essences and equivalent synthetic ingredients which are added to the flavour composition for the principal purpose of providing flavour to the confectionery product. It excludes warming and cooling agents as described above. Flavouring agents well known in the confectionery art can be added to the flavour compositions of the invention. These flavouring agents can be chosen from synthetic flavouring liquid and/or oils derived from plants leaves, flowers, fruits and so forth, and combinations thereof. Representative flavouring liquids include: artificial, natural or synthetic fruit flavours such as lemon, orange, banana, grape, lime, apricot and grapefruit oils and fruit essences including apple, strawberry, cherry, orange, pineapple and so forth; bean and nut derived flavours such as coffee, cocoa, cola, peanut, almond and so forth; and root derived flavours such as licorice or ginger. The amount of flavouring agent employed is normally a matter of preference subject to such factors as flavour type, base type and strength desired. In general, amounts up to 4% by weight of the confectionery composition are usable with amounts of from 0.1% to 1% by weight of the composition being preferred.

### 3. METHOD OF MANUFACTURE

The present invention further relates to a method of continuous manufacture of the confectionery described herein. The method comprises the steps of forming a liquid starting material comprising one or more sugar bases, one or more xanthine derivatives and water; removing at least part of the water from said liquid starting material to form a candy base; forming a substantially flat sheet of said candy base on a rolling belt in a continuous manner; said substantially flat sheet of said candy base comprising a front and a rear surface, said rear surface being in contact with said rolling belt; adding to the front surface of said substantially flat sheet of candy base one or more edible organic acids. Said substantially flat sheet of candy base is then folded and rolled in a continuous manner and it is formed into a rope and finally screw extruded. The confectionery manufactured according to this method is preferably a centre-filled confectionery.

By "substantially" flat sheet of candy mass is meant a sheet which has at least 80%, preferably 90%, more preferably 99% uniform thickness, said thickness being measured as the distance between said front and rear surface. The term "flat" as used herein is synonym for "horizontal", "even", "plane" and "planar".

One or more substantially flat sheet of candy mass can be formed over the same rolling belt. The thickness of said substantially flat sheet of candy mass is from 2 mm to 25 mm, preferably from 5 mm to 20 mm.

The edible organic acids may be added in a variety of ways. The edible organic acids may be sprayed over at least a portion of said substantially flat sheet of candy mass. Alternatively the edible organic acids may be dripped, sprinkled, drizzled, foamed, scattered, spurted, shot or showered over at least a part of the sheet. Any of these methods may also be combined in the same continuous line of manufacture. The preferred method may depend on whether the edible organic acids are in a powder, encapsulate, liquid or intermediate form, such as paste and/or cream. The edible organic acids may be added continuously or at intervals, one or more edible organic acids may be added on the front surface of said sheet, while one or more edible organic acids may be added on the rear surface.

The confectionery compositions manufactured according to the present invention comprise a candy base of improved stability. Without wishing to be bound by theory, it is believed that by having fructose levels of less than 1.90%, the candy base is more stable and less sticky due to reduced hygroscopicity than a candy base having fructose in higher level.

### 4. EXAMPLES

### 4-1 Centre-fined confectionery

### Centre-fill composition:

| **Material Description** | **% w/w** |
|---|---|
| GLYCERIN | 55.975 |
| GLUCOSE SYRUP (80% solids) | 30.00 |
| SUCROSE | 10.00 |
| CITRIC ACID ANHYDROUS | 3.00 |
| XANTHAN GUM | 0.25 |
| ANTHOCANINS (COLOURANTS) | 0.15 |
| HEATING AGENT: OPTAHEAT | 0.15 |
| GUARANA EXTRACT (10% CAFFEINE) | 0.125 |
| TAURINE ANHYDROUS | 0.-10 |
| FLAVOURS | 0.25 |
| | 100.00 |

### Manufacturing instructions:

The glycerin is weighed at room temperature into a suitable vessel. Anthocyanins, taurine and guarana powders are added and mix until dispersed. Subsequently, xanthan gum is added and mixed until dispersed. The glucose syrup is the pre-heated at 40°C and added to the batch, which is then mixed and heated up to 80°C. After stopping heating, sucrose and citric acid are added and mixed until dissolved. Finally, flavours and heating agent are added and mixed for 10 minutes.

Suitable vessels for making the center-fill compositions should be made of stainless steel or other food grade acceptable material which can easily be heated and cooled. Ideally the mixing vessels should have scraped wall mixers as well as a medium/high shear mixer. Suitable high shear mixers include static in-line mixers, jet mixers such as those manufactured by Ika GmbH, or rotor stator mixers such as those manufactured by Silverson Inc. Care must be taken when using high shear mixers that the pseudoplastic polymers are not broken into lower molecular weight components.

### Shell composition:

| | Before cooking | After cooking |
|---|---|---|
| Material Description | % w/w | % w/w |
| SUCROSE | 48.5537 | 48.5537 |
| GLUCOSE LIQUID | 55.8578 | 46.5482 |
| WATER DRINKING | 16.2166 | 2.4300 |
| CITRIC ACID ANHYDROUS | 1.2000 | 1.2000 |
| ANHYDROUS CAFFEINE | 0.7781 | 0.7781 |
| COOLING AGENT: COOLER-2 | 0.3000 | 0.3000 |
| FLAVOUR PREMIX | 0.1900 | 0.1900 |
| | 125.4227 | |
| Processing/Moisture/Volatiles Loss | - 25.4227 | |
| Total | 100.0000 | 100.0000 |

### Manufacturing instructions:

A pre-solution of caffeine is prepared by mixing 5% anhydrous caffeine powder with water at 50°C to make a clear solution.

Sucrose, glucose liquid, water and the caffeine solution are weighed and premixed until homogeneous. The mixture is pre-cooked at 110°C and filtered for impurities. The dissolved glucose/sucrose/caffcine solution is filtered for impurities and pumped into the main cooker. The mixture is cooked at around 145°C and dispensed into an expansion chamber for evaporation. This liquid starting material is the fed into a vacuum chamber at -0.92 bar minimum to remove further water, the resulting candy mass should be less than 3% water. The liquid candy mass at 145°C is subsequently fed into an in-line high shear mixer where flavours and optional liquid ingredients can be injected using metered dosing pumps.

The candy mass is subsequently dispensed onto a moving stainless steel belt to for a substantially flat sheet at a controlled temperature, a thin film of wax is used to ensure good separation of the mass from the cooling belt. As the sheet of candy mass is carried forward by the belt it is spread evenly by a fixed PTFE roller to ensure good temperature distribution. Anhydrous citric acid is deposited onto the front surface of the sheet of candy mass using a calibrated augur. The sheet of candy mass is subsequently folded onto itself from either side using PTFE ploughs so that the outer edges now fold over and trap the deposited citric acid. This folding action is repeated once more before the candy mass exits at from 80°C to 90°C.

The candy mass is transferred through a vertical batch roller, also known as rope former, into a twin screw extruder preheated to 85°C. The twin screw extruder allows the simultaneous extrusion of the candy mass and liquid center-fill into a continuous rope. The rope is fed into punching equipment to form drops. Talc is used to prevent the candy mass and/or drops from sticking to the forming equipment. The drops are cooled down on a cooling belt passing the cooling tunnel to obtain their final consistency for sorting and packing.

The percentage of fructose by weight of the confectionery on a dry matter basis is about 0.7%.

### 4.2 Hard-boiled confectionery.

### Candy base composition:

| | Before cooking | After cooking |
|---|---|---|
| Material Description | % w/w | % w/w |
| SUCROSE | 59.7927 | 59.7927 |
| GLUCOSE LIQUID | 43.6740 | 34.9392 |
| WATER DRINKING | 16.2166 | 2.8000 |
| CITRIC ACID ANHYDROUS | 1.2000 | 1.2000 |
| ANHYDROUS CAFFEINE | 0.7781 | 0.7781 |
| COOLING AGENT: COOLER-2 | 0.3000 | 0.3000 |
| FLAVOUR PREMIX | 0.1900 | 0.1900 |
| | 122.1514 | |
| Processing/Moisture/Volatiles Loss | - 22.1514 | |
| Total | 100.0000 | 100.0000 |

### Manufacturing instructions:

A pre-solution of caffeine is prepared by mixing 5% anhydrous caffeine powder with water at 50°C to make a clear solution.

Sucrose, glucose liquid, water and the caffeine solution are weighed and premixed until homogeneous. The mixture is pre-cooked at 110°C and filtered for impurities. The dissolved glucose/sucrose/caffeine solution is filtered for impurities and pumped into the main cooker. The mixture is cooked at around 145°C and dispensed into an expansion chamber for evaporation. This liquid starting material is the fed into a vacuum chamber at -0.92 bar minimum to remove further water, the resulting candy mass should be less than 3% water. The liquid candy mass at 145°C is subsequently fed into an in-line high shear mixer where flavours and optional liquid ingredients can be injected using metered dosing pumps.

The candy mass is subsequently dispensed onto a moving stainless steel belt to form a substantially flat sheet at a controlled temperature, a thin film of wax is used to ensure good separation of the mass from the cooling belt. As the sheet of candy mass is carried forward by the belt it is spread evenly by a fixed PTFE roller to ensure good temperature distribution. Anhydrous citric acid is deposited onto the front surface of the sheet of the candy mass using a calibrated augur The sheet of candy mass is subsequently folded onto itself from either side using PTFE ploughs so that the outer edges now fold over and trap the deposited citric acid. This folding action is repeated once more before the candy mass exits at from about 80°C to about 90°C.

The candy mass is transferred to horizontal batch roller, also known as rope former, to temper the candy mass and is pulled into a continuous rope. The rope is sized and fed into punching equipment to form drops. Talc is used to prevent the Candy mass and/or drops from sticking to the forming equipment. The drops are cooled down on a cooling belt passing the cooling tunnel to obtain their final consistency for sorting and packing. The percentage of fructose by weight of the confectionery on a dry matter basis is about 0.7%.

## Claims

1. A confectionery composition comprising a candy base, said candy base comprising:
i) one or more sugar bases;
ii) at least one edible organic acid; and
iii) one or more xanthine derivatives;
**characterized in that** the composition comprises greater than 0% and less than 1.90% of fructose by weight of said candy base.

2. The confectionery composition according to Claim 1, wherein said candy base comprises less than 1.5% of fructose by weight of said candy base, preferably less than 1.0%, more preferably less than 0.75% of fructose by weight of said candy base.

3. The confectionery composition according to Claim 1 or Claim 2, wherein said at least one edible organic acid comprises citric acid, malic acid, lactic acid, fumaric acid, tartaric acid, adipic acid, ascorbic acid or mixtures thereof.

4. The confectionery composition according to any one of the preceding claims, wherein said one or more xanthine derivatives comprises xanthine, caffeine, theobromine, theophylline, their salts or mixture thereof, preferably caffeine.

5. The confectionery composition according to any one of the preceding claims, wherein said candy base comprises from 0.01% to 5% of said one or more xanthine derivatives, preferably from 0.05% to 2.5%, more preferably from 0.1% to 1% by weight of said candy base.

6. The confectionery composition according to anyone of the preceding claims, wherein said composition is in the form of a centre-filled candy comprising from 60% to 95% candy base and from 5% to 40% filling, by weight of the centre-filled candy.

7. The confectionery composition according to Claim 6, wherein said centre-filled candy comprises a cooling agent, a warming agent or mixtures thereof.

8. The confectionery composition according to Claim 7, wherein said candy base comprises said cooling agent and said centre-fill comprises said warming agent.

9. A method of continuous manufacture of a confectionery according to any one of Claims 1 to 8, said method comprising the steps of:
a) forming a liquid starting material comprising one or more sugar bases, one or more xanthine derivatives and water;
b) removing at least part of the water from said liquid starting material to form a candy base;
c) forming a substantially flat sheet of said candy base on a rolling belt in a continuous manner; said substantially flat sheet of said candy base comprising a front and rear surface, said rear surface being in contact with said rolling belt;
d) adding to the front surface of said substantially flat sheet of said candy base one or more edible organic acids;
e) folding and rolling in a continuous manner said substantially flat sheet of candy base comprising said one or more edible organic acid on the front surface to form a candy base; and
f) forming a rope of candy base and screw extruding said rope of candy base.

10. The method according to Claim 9, wherein said confectionery is a centre-filled confectionery.

## Patentansprüche

1. Süßwarenzusammensetzung, umfassend eine Bonbonbasis, wobei die Bonbonbasis Folgendes umfasst:
i. eine oder mehrere Zuckerbasen;
ii. mindestens eine essbare organische Säure; und
iii. ein oder mehrere Xanthinderivate;
**dadurch gekennzeichnet, dass** die Zusammensetzung zu mehr als 0 Gew.-% und weniger als 1,90 Gew.-% der Bonbonbasis Fructose umfasst.

2. Süßwarenzusammensetzung nach Anspruch 1, wobei die Bonbonbasis zu weniger als 1,5 Gew.-% der Bonbonbasis Fructose, vorzugsweise zu weniger als 1,0 Gew.-%, mehr bevorzugt weniger als 0,75 Gew.-% der Bonbonbasis Fructose umfasst.

3. Süßwarenzusammensetzung nach Anspruch 1 oder Anspruch 2, wobei die mindestens eine essbare organische Säure Citronensäure, Äpfelsäure, Milchsäure, Fumarsäure, Weinsäure, Adipinsäure, Ascorbinsäure oder Mischungen davon umfasst.

4. Süßwarenzusammensetzung nach einem der vorstehenden Ansprüche, wobei das eine oder die mehreren Xanthinderivate Xanthin, Koffein, Theobromin, Theophyllin, deren Salze oder Mischungen davon, vorzugsweise Koffein umfassen.

5. Süßwarenzusammensetzung nach einem der vorstehenden Ansprüche, wobei die Bonbonbasis von 0,01 Gew.-% bis 5 Gew.-%, vorzugsweise von
0,05 Gew.-% bis 2,5 Gew.-%, mehr bevorzugt von 0,1 Gew.-% bis 1 Gew.-% der Bonbonbasis das eine oder die mehreren Xanthinderivate umfasst.

6. Süßwarenzusammensetzung nach einem der vorstehenden Ansprüche, wobei die Zusammensetzung in der Form eines in der Mitte gefüllten Bonbons ist, umfassend von 60 Gew.-% bis 95 Gew.-% Bonbonbasis und von 5 Gew.-% bis 40 Gew.-% Füllung, bezogen auf das Gewicht des in der Mitte gefüllten Bonbons.

7. Süßwarenzusammensetzung nach Anspruch 6, wobei das in der Mitte gefüllte Bonbon ein Kühlmittel, ein Wärmemittel oder Mischungen davon umfasst.

8. Süßwarenzusammensetzung nach Anspruch 7, wobei die Bonbonbasis das Kühlmittel umfasst und die mittige Füllung das Wärmemittel umfasst.

9. Verfahren zum kontinuierlichen Herstellen einer Süßware nach einem der Ansprüche 1 bis 8, wobei das Verfahren die folgenden Schritte umfasst:
a) Bilden eines flüssigen Ausgangsmaterials, umfassend eine oder mehrere Zuckerbasen, ein oder mehrere Xanthinderivate und Wasser;
b) Entfernen von mindestens einem Teil des Wassers aus dem flüssigen Ausgangsmaterial, um eine Bonbonbasis zu bilden;
c) Bilden einer im Wesentlichen flachen Lage der Bonbonbasis auf einem Walzband auf eine kontinuierliche Weise; wobei die im Wesentlichen flache Lage der Bonbonbasis eine vordere und eine hintere Oberfläche umfasst, wobei die hintere Oberfläche in Kontakt mit dem Walzband ist;
d) Hinzufügen einer oder mehrerer essbarer organischer Säuren zu der im Wesentlichen flachen Lage der Bonbonbasis;
e) Falten und Walzen der im Wesentlichen flachen Lage der Bonbonbasis, die die eine oder die mehreren essbaren organischen Säuren auf der vorderen Oberfläche umfasst, auf eine kontinuierliche Weise, um eine Bonbonbasis zu bilden; und
f) Bilden eines Strangs aus Bonbonbasis und Schneckenextrudieren des Strangs aus Bonbonbasis.

10. Verfahren nach Anspruch 9, wobei die Süßware eine in der Mitte gefüllte Süßware ist.

## Revendications

1. Composition en confiserie comprenant une base de confiserie, ladite base de confiserie comprenant :
i. une ou plusieurs bases de sucre ;
ii. au moins un acide organique comestible ; et
iii. un ou plusieurs dérivés de xanthine ;
**caractérisée en ce que** la composition comprend plus de 0 % et moins de 1,90 % de fructose en poids de ladite base de confiserie.

2. Composition en confiserie selon la revendication 1, dans laquelle ladite base de confiserie comprend moins de 1,5 % de fructose en poids de ladite base de confiserie, de préférence moins de 1,0 %, plus préférablement moins de 0,75 % de fructose en poids de ladite base de confiserie.

3. Composition en confiserie selon la revendication 1 ou la revendication 2, dans laquelle ledit au moins un acide organique comestible comprend de l'acide citrique, de l'acide malique, de l'acide lactique, de l'acide fumarique, de l'acide diacétyltartrique, de l'acide adipique, de l'acide ascorbique ou leurs mélanges.

4. Composition en confiserie selon l'une quelconque des revendications précédentes, dans laquelle lesdits un ou plusieurs dérivés de xanthine comprennent de la xanthine, de la caféine, de la théobromine, de la théophylline, leurs sels ou un mélange de ceux-ci, de préférence de la caféine.

5. Composition en confiserie selon l'une quelconque des revendications précédentes, dans laquelle ladite base de confiserie comprend de 0,01 % à 5 % desdits un ou plusieurs dérivés de xanthine, de préférence de 0,05 % à 2,5 %, plus préférablement de 0,1 % à 1 % en poids de ladite base de confiserie.

6. Composition en confiserie selon l'une quelconque des revendications précédentes, où ladite composition est sous la forme d'un bonbon rempli au centre comprenant de 60 % à 95 % de base de confiserie et de 5 % à 40 % de garniture, en poids du bonbon rempli au centre.

7. Composition en confiserie selon la revendication 6, dans laquelle ledit bonbon rempli au centre comprend un agent refroidissant, un agent réchauffant ou leurs mélanges.

8. Composition en confiserie selon la revendication 7, dans laquelle ladite base de confiserie comprend ledit agent refroidissant et ledit remplissage central comprend ledit agent réchauffant.

9. Procédé de fabrication continue d'une confiserie selon l'une quelconque des revendications 1 à 8, ledit procédé comprenant les étapes consistant à :
a) former un matériau de départ liquide comprenant une ou plusieurs bases de sucre, un ou plusieurs dérivés de xanthine et de l'eau ;
b) éliminer au moins une partie de l'eau dudit matériau de départ liquide de façon à former une base de confiserie ;
c) former une feuille essentiellement plate de ladite base de confiserie sur une courroie de laminage d'une manière continue ; ladite feuille essentiellement plate de ladite base de confiserie comprenant une surface avant et arrière, ladite surface arrière étant en contact avec ladite courroie de laminage ;
d) ajouter à la surface avant de ladite feuille essentiellement plate de ladite base de confiserie un ou plusieurs acides organiques comestibles ;
e) plier et laminer d'une manière continue ladite feuille essentiellement plate de base de confiserie comprenant lesdits un ou plusieurs acides organiques comestibles sur la surface avant de façon à former une base de confiserie ; et
f) former un cordon de base de confiserie et extruder à la vis ledit cordon de base de confiserie.

10. Procédé selon la revendication 9, dans lequel ladite confiserie est une confiserie remplie au centre.
